# EUROPÄISCHE PATENTANMELDUNG

(11) **EP 0 542 088 A1**
(43) Veröffentlichungstag der Anmeldung: **19.05.1993**
(21) Anmeldenummer: 92118756.3
(22) Anmeldetag: 02.11.1992
(51) Int. Cl.: G06F 1/00

(54) **Schutzvorrichtung für Schaltungsteile und/oder Daten in einem elektrotechnischen Gerät**

(30) Priorität: 11.11.1991 DE 4137043
(71) Anmelder: Siemens Nixdorf Informationssysteme Aktiengesellschaft, D-33102 Paderborn (DE)
(72) Erfinder: Depta, Robert, Dipl.-Phys., W-8900 Augsburg 21 (DE); Grandy, Josef, Dipl.-Ing. (FH), W-8901 Rehling (DE)
(74) Vertreter: Fuchs, Franz-Josef, Dr.-Ing.

(57) **Zusammenfassung**

Die Schutzvorrichtung besteht aus einer Primärspule (PSP) und einer Sekundärspule (SSP), die sich innerhalb des Gerätegehäuses befinden und einer Schaltungsanordnung, die eine Signalübertragung zwischen den Spulen (SSP,PSP) erlaubt. Der Kopplungsgrad der Spulen (PSP,SSP) zueinander ist von deren Einbaulage und Umgebung abhängig und kann durch Vergleich des gesendeten mit dem empfangenen Signal mit hoher Genauigkeit bestimmt werden. Da zu einer Manipulation am Gerät (LP) das Gerätegehäuse (GA,GB) geöffnet werden muß, ändert sich zwangsweise der Kopplungsgrad. Die Manipulation wird vor jeder Inbetriebnahme erkannt.

## Beschreibung

Die Erfindung betrifft eine Schutzvorrichtung für Schaltungsteile und/oder Daten in einem elektrotechnischen Gerät nach dem Oberbegriff des Anspruchs 1.

Der Gegenstand der vorliegenden Erfindung findet in Geräten Verwendung, die geheimzuhaltende Schaltungen und/oder Speicherinhalte enthalten. Solche Geräte verwendet man beispielsweise im militärischen Bereich, im Bankwesen und allgemein im Bereich der elektrischen oder optischen Übertragung von personenbezogenen oder sonstigen zu schützenden Daten. Häufig sind in solchen Geräten Chiffrierschlüssel gespeichert oder Verschlüsselungsalgorithmen durch Schaltungsanordnungen realisiert.

Zum Schutz der sicherheitsrelevanten Gerätebestandteile besteht beispielsweise die Möglichkeit, diese Geräte nur unter Aufsicht von Sicherheitspersonal zu verwenden und die Geräte bei Nichtbenutzung beispielsweise in einem Tresor wegzuschließen. Da dies jedoch insbesondere bei häufigerer Nutzung wenig praktikabel ist, werden andere Vorkehrungen getroffen. So verwendet man beispielsweise verschiedene Gehäuseüberwachungssensoren. Als Beispiel seien hier Schalter, Fotosensoren, Infrarotsysteme, Ultraschallüberwachungssysteme genannt. Diese Systeme haben alle gemeinsam, daß sie während der gesamten Lebensdauer eines Gerätes aktiv sein müssen, um Manipulationen am Gerät erkennen zu können. Bei ständigem Betrieb eines Überwachungssystems ergibt sich das Problem einer für die gesamte Gerätelebensdauer ausreichenden, von einer Stromzufuhr von außen unabhängigen Stromversorgung.

Aus DE-A1-33 47 483 ist eine Vorrichtung zur Sicherung geheimer, in einem Speichermedium abgelegter Informationen bekannt. Das Speichermedium befindet sich in einem zugriffssicheren, mehrere Detektorelemente enthaltenden Gehäuse. Die Detektorelemente werden in bestimmten Zeitabständen mit einer ebenfalls im Gehäuse befindlichen Batterie verbunden, wodurch sie jeweils kurzzeitig in Betrieb gelangen. Durch diese kurzzeitige Inbetriebnahme verlängert sich die Lebensdauer der Sicherungsvorrichtung zwar gegenüber Geräten, deren Sicherungsvorrichtung permanent in Betrieb ist, die Sicherungsvorrichtung bleibt jedoch von einer eigenen Energiequelle abhängig.

Der vorliegenden Erfindung liegt deshalb die Aufgabe zugrunde, eine Schutzvorrichtung in der Weise auszubilden, daß ein möglichst unüberwindbarer Schutz gegen Ausspähung und Veränderung von Schaltungsteilen und/oder Daten in einem elektrotechnischen Gerät, das von einem Gehäuse umgeben ist, gewährleistet ist, ohne daß der Schutzvorrichtung eine eigene Energiequelle zugeordnet werden muß, die einen von einer externen Energieversorgung unabhängigen Betrieb der Schutzvorrichtung gewährleistet.

Diese Aufgabe wird erfindungsgemäß durch die in Anspruch 1 angegebenen Merkmale gelöst.

Durch die erfindungsgemäße Schutzvorrichtung entfällt der sonst übliche Zwang, eine Stromversorgung innerhalb des Gerätegehäuses vorzusehen, die einen sicheren Betrieb einer Schutzvorrichtung während der gesamten Lebensdauer eines Gerätes gewährleisten muß. Da die Lage der Primär- und der Sekundärspule zueinander sich von Gerät zu Gerät unterscheidet, und dadurch, daß ein bestimmter magnetischer Kopplungsgrad zwischen den beiden Spulen nach einem Öffnen und Schließen eines Gerätes nicht identisch wiederherstellbar ist, genügt es, beispielsweise vor jeder Inbetriebnahme des Gerätes zu überprüfen, ob die Sollgröße für den Grad der magnetischen Kopplung der Istgröße der magnetischen Kopplung entspricht. Der Grad der magnetischen Kopplung kann beispielsweise durch die Phasenverschiebung und das Amplitudenverhältnis zwischen einem von der Nachrichtenquelle gesendeten Wechselspannungssignal zu einem von der Nachrichtensenke empfangenen Wechselspannungssignal charakterisiert werden.

Die Streubreite der magnetischen Kopplung zwischen Primär- und Sekundärspule von Gerät zu Gerät kann in vorteilhafter Weise dadurch erhöht werden, daß zwischen der Primärspule und der Sekundärspule eine Substanz eingebracht ist, die ferromagnetische Eigenschaften aufweist. Diese Substanz kann zu diesem Zweck beispielsweise in unterschiedlichen Mengen, an unterschiedlichen Orten und unterschiedlicher Zusammensetzung zwischen die Spulen eingebracht werden.

Die Permeabilität dieser Substanzen kann beispielsweise durch die Verwendung von Harzen mit darin eingelagerten ferromagnetischen Partikeln besonders leicht beeinflußt werden. So können beispielsweise mehr oder weniger ferromagnetische Partikel in einer bestimmten Menge Harz vorhanden sein.

Zur zusätzlichen Erhöhung der Sicherheit des Gesamtsystems kann innerhalb des Gehäuses auch eine Einrichtung zur wahlweisen Beeinflussung des Grades der magnetischen Kopplung zwischen Primär- und Sekundärspule vorgesehen sein. Dies kann beispielsweise ein im Gerät befindlicher Magnet oder eine weichmagnetische Substanz sein, der/die wahlweise in unterschiedliche Lagen gebracht werden kann und dadurch die Kopplung zwischen Primär- und Sekundärspule beeinflußt. Beschränkt man die unterschiedlichen Lagen des Magneten oder der weichmagnetischen Substanz auf eine bestimmte Anzahl und bestimmt für jede Lage des Magneten oder der weichmagnetischen Substanz eine Sollgröße der magnetischen Kopplung zwischen den Spulen, dann stehen mehrere Möglichkeiten zur Sicherheitsüberprüfung zur Verfügung.

Die Einrichtung zur wahlweisen Beeinflussung des Grades der magnetischen Kopplung zwischen Primär- und Sekundärspule kann auch durch eine Spule erfolgen, die so angeordnet ist, daß ein von dieser Spule erzeugtes Magnetfeld zumindest teilweise in den Raum zwischen Primär- und Sekundärspule reicht. Dieser Spule können definierte Ströme aufgeprägt werden, wobei jedem Wert dieses Stromes ein Sollwert der magnetischen Kopplung zwischen Primär- und Sekundärspule zugeordnet werden kann. Durch einen Zufallsgenerator kann bestimmt werden, welcher Stromwert bei welcher Abfrage der Kopplungsparameter verwendet wird. Damit kann vor oder nach jeder Abfrage ein neuer Sollwert der magnetischen Kopplung eingestellt werden.

Weitere Ausgestaltungen und Weiterbildungen der Erfindung sind in weiteren Unteransprüchen angegeben.

Ein Ausführungsbeispiel der Erfindung wird anhand der Zeichnung näher erläutert.

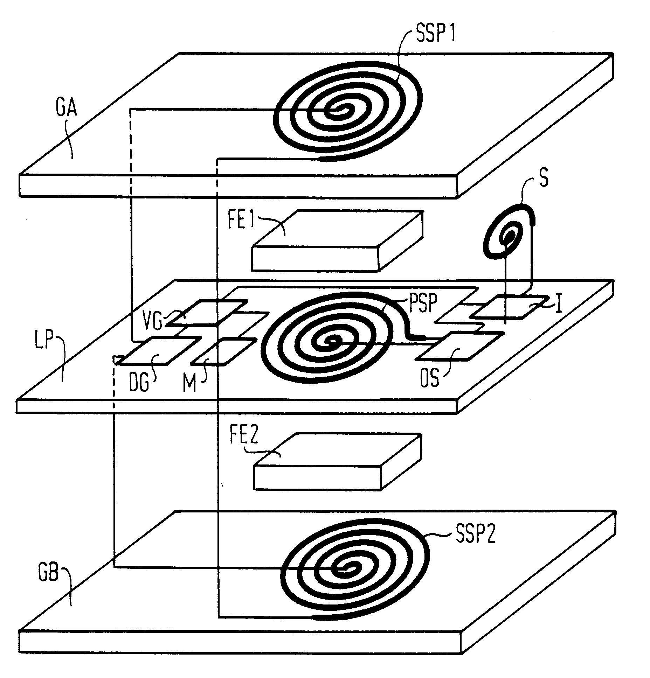

FIG 1 zeigt schematisch ein Gerät mit zweiteiligem Gehäuse in Explosionsdarstellung.

FIG 1 zeigt ein Gerät, das auf einem Trägerelement LP aufgebaut ist. Als Trägerelement LP dient eine Leiterplatte. Auf dieser Leiterplatte sind unter anderem eine Primärspule PSP, eine Nachrichtenquelle OS in Form eines Oszillators, eine Nachrichtensenke DG, ein Vergleicher VG, ein Speicher M und eine Spule S mit dazugehöriger Gleichstromquelle I angeordnet. Die Leiterplatte LP ist zwischen einer ersten Gehäusehälfte GA und einer zweiten Gehäusehälfte GB angeordnet. Im zusammengebauten Zustand umschließen die beiden Gehäusehälften GA, GB die Leiterplatte LP vollständig. Mit der ersten Gehäusehälfte GA ist ein erster Teil einer Sekundärspule SSP1 und mit der zweiten Gehäusehälfte GB ist ein zweites Teil einer Sekundärspule SSP2 mechanisch fest verbunden. Diese mechanisch feste Verbindung entsteht z.B. durch Aufkleben bzw. Eingießen der flächigen Spule auf bzw. in die Gehäusewand. Die flächige Spule kann auch in Form von gedruckten oder aufgedampften Spulen oder in anderer Weise auf einen Untergrund aufgebrachten Spulenformen realisiert werden. Eine andere Möglichkeit wäre das Anschrauben oder Mieten der Spulen, die auch räumlich ausgebildet sein können. Die Wickelachsen der beiden Sekundärspulenteile SSP1, SSP2 und der Primärspule PSP sind beispielsweise in einer Linie angeordnet.

Zwischen dem ersten Teil der Sekundärspule SSP1 und der Primärspule PSP ist eine erste Substanz FE1 mit ferromagnetischen Eigenschaften und zwischen der Primärspule PSP und dem zweiten Teil der Sekundärspule SSP2 ist eine zweite Substanz FE2 mit ferromagnetischen Eigenschaften angeordnet. Als Substanz FE mit ferromagnetischen Eigenschaften werden z.B. Ferrofluide oder dielektrische Harze mit verschiedener Dotierung der magnetischen darin eingelagerten Partikel verwendet. Ferrofluide können zusätzlich dazu verwendet werden, die Lage des Gerätes LP innerhalb des Gehäuses GA, GB oder der gesamten Lage des Gerätes LP mit Gehäuse GA, GB im Raum zu überwachen. Der Grund dafür ist, daß sich bei einer Lageänderung von Gerät LP und/oder Gehäuse GA, GB auch die Lage des Ferrofluid und damit die magnetische Kopplung zwischen den Spulen PSP,SSP ändert.

Die Spule S, die mit der Gleichstromquelle I verbunden ist, ist so auf der Leiterplatte LP angeordnet, daß das durch den Stromfluß in der Spule S erzeugte Magnetfeld auf die erste ferromagnetische Substanz FE1 einwirken kann. Es könnte auch eine weitere Spule S im Gerät angeordnet werden, die z.B. auf die zweite ferromagnetische Substanz FE2 Einfluß nimmt.

Der Oszillator OS, die Nachrichtensenke DG, der Vergleicher VG, der Speicher M und die Stromquelle I stehen zu Zwecken des Datenaustauschs miteinander in Verbindung. Die Primärspule PSP ist an den Oszillator OS angeschlossen. Die beiden Sekundärspulenteile SSP1, SSP2 sind mit je einem Anschluß miteinander verbunden, während der andere Anschluß zur Nachrichtensenke DG geführt ist. Die Kontaktierung der Sekundärspulen SSP1, SSP2 untereinander und zur Leiterplatte LP kann beispielsweise durch Kontaktelemente, wie sie in DE-U 91 05 961 beschrieben sind, vorgenommen werden.

Die Schutzvorrichtung wird in folgender Weise eingesetzt. Bei Inbetriebnahme des Gerätes schwingt der Oszillator OS mit einer bestimmten Frequenz mit bestimmter Amplitude und Phasenlage. Über die Primärspule PSP wird dieses Signal auf elektromagnetischem Wege, beeinflußt durch die beiden Substanzen FE1, FE2 mit ferromagnetischen Eigenschaften und gegebenenfalls auch durch das Magnetfeld der Spule S beeinflußt, zu den beiden Teilen der Sekundärspule SSP1, SSP2 übertragen. Das auf diese Spulen SSP1, SSP2 übertragene Signal gelangt in die Nachrichtensenke DG. Die Nachrichtensenke DG ermittelt die Istgröße des Grades der magnetischen Kopplung zwischen Sekundär- und Primärspule SSP, PSP in Form der Phasenverschiebung und/oder des Amplitudenverhältnisses des vom Oszillator OS ausgesendeten Signals zum von der Nachrichtensenke DG empfangenen Signal. Diese Istgröße und eine im Speicher M abgelegte Sollgröße werden dem Vergleicher VG zugeführt und dort verglichen. Nur bei positivem Vergleichsergebnis, d.h. Istgröße ist gleich Sollgröße, ist das Gerät funktionsfähig.

Um die Sicherheit, die mit der Schutzvorrichtung erreicht werden kann, weiter zu erhöhen, kann die Spule S benutzt werden, die mit der Gleichstromquelle I verbunden ist. Mit Hilfe dieser Spule S kann die Kopplung zwischen Primärspule PSP und der Sekundärspule SSP1 beeinflußt werden. Wie stark diese Beeinflussung ist, kann durch den Strom, der durch die Spule S fließt, bestimmt werden. Zu jedem Strom durch die Spule S kann eine Sollgröße der magnetischen Kopplung bestimmt und im Speicher M abgelegt werden. In zufälliger Folge können nun bestimmte Stromwerte bei aufeinanderfolgenden Inbetriebnahmen des Gerätes verwendet werden.

Nach erfolgter Überprüfung kann die gesamte Schutzvorrichtung außer Betrieb genommen werden. Erst bei der nächsten Inbetriebnahme des Gerätes ist eine neue Überprüfung und damit eine neue Aktivierung der Schutzvorrichtung erforderlich. Findet in einem Zeitraum zwischen zwei Aktivierungen der Schutzvorrichtung eine Manipulation am Gerät statt, dann müssen dazu die Gehäuseschalen GA, GB voneinander wegbewegt, zerstört oder dergleichen werden. Dadurch ändert sich zwangsweise die magnetische Kopplung zwischen der Primärspule PSP und den Teilen der Sekundärspule SSP1, SSP2, auch wenn das Gehäuse wieder geschlossen wird. Ein Zustand des Gerätes, wie er vor dem Öffnen des Gerätes vorlag, ist nicht mit so hoher Genauigkeit wieder herstellbar, daß die Kopplungseigenschaften zwischen den Spulen PSP, SSP vor und nach dem Öffnen und wieder Schließen identisch sind. Ist- und Sollgröße der magnetischen Kopplung stimmen also nach einer Manipulation keinesfalls mehr überein, so daß das Gerät nicht mehr in Betrieb gehen kann und damit nicht zu sicherheitsgefährdenden Maßnahmen mißbraucht werden kann.

## Patentansprüche

1. Schutzvorrichtung gegen Ausspähung und Veränderung von Schaltungsteilen und/oder Daten in einem elektrotechnischen Gerät, das in einem Gehäuse untergebracht ist, **dadurch gekennzeichnet,** daß sich eine Primärspule (PSP) im Inneren des Gehäuses befindet, daß eine wenigstens einteilige Sekundärspule (SSP) vorgesehen ist, die mit mindestens einem Gehäusebereich (GA,GB) in mechanisch fester Verbindung steht, daß die Primärspule (PSP) bezüglich der Sekundärspule (SSP) so angeordnet ist, daß eine magnetische Kopplung der Primärspule (PSP) zumindest mit einem Teil der Sekundärspule (SSP) gewährleistet ist, daß die Primär- bzw. Sekundärspule (PSP,SSP) mit einer Nachrichtenquelle (OS) und die Sekundär- bzw. Primärspule (SSP,PSP) mit einer Nachrichtensenke (DG) verbunden ist, daß mindestens eine Sollgröße für den Grad der magnetischen Kopplung zwischen Primär- und Sekundärspule (PSP,SSP) in einem Speicher (M) des Gerätes abgelegt ist, und daß das Gerät einen Vergleicher (VG) zum Vergleich der Sollgröße mit der Istgröße des Grades der magnetischen Kopplung umfaßt.

2. Schutzvorrichtung nach Anspruch 1, **dadurch gekennzeichnet,** daß zwischen der Primärspule (PSP) und der Sekundärspule (SSP) eine Substanz (FE) angeordnet ist, die ferromagnetische Eigenschaften aufweist.

3. Schutzvorrichtung nach Anspruch 2, **dadurch gekennzeichnet,** daß die Substanz (FE) mit ferromagnetischen Eigenschaften als Harz mit darin eingelagerten ferromagnetischen Partikeln ausgebildet ist.

4. Schutzvorrichtung nach einem der vorhergehenden Ansprüche, **dadurch gekennzeichnet,** daß das Gerät eine Einrichtung zur wahlweisen Beeinflussung des Grades der magnetischen Kopplung zwischen Primär- und Sekundärspule (PSP, SSP) aufweist.

5. Schutzvorrichtung nach Anspruch 4, **dadurch gekennzeichnet,** daß die Einrichtung zur wahlweisen Beeinflussung durch eine Spule (S) gebildet ist, die so angeordnet ist, daß ein von dieser Spule (S) erzeugtes Magnetfeld zumindest teilweise in den Raum zwischen Primär- und Sekundärspule (PSP,SSP) reicht.

6. Schutzvorrichtung nach einem der vorhergehenden Ansprüche, **dadurch gekennzeichnet,** daß das Gerät im Innern des Gehäuses auf einem Trägerelement (LP) aufgebaut ist, und daß die Primärspule (PSP) auf diesem Trägerelement (LP) angeordnet ist.
